(19) Europäisches Patentamt
European Patent Office
Office européen des brevets

(11) **EP 1 753 565 B1**

(12) **EUROPEAN PATENT SPECIFICATION**

(45) Date of publication and mention
of the grant of the patent:
**27.01.2010 Bulletin 2010/04**

(51) Int Cl.:
*B22F 3/00* (2006.01)    *B22F 3/11* (2006.01)
*B22F 3/22* (2006.01)    *B22F 7/00* (2006.01)
*B01D 39/20* (2006.01)

(21) Application number: **05717145.6**

(22) Date of filing: **24.03.2005**

(86) International application number:
**PCT/EP2005/051378**

(87) International publication number:
**WO 2005/099940 (27.10.2005 Gazette 2005/43)**

(54) **METHOD OF MANUFACTURING OF A SINTERED METAL FIBER MEDIUM**

VERFAHREN ZUR HERSTELLUNG EINES GESINTERTEN KÖRPERS AUS METALLFASERN

PROCEDE POUR PRODUIRE UN CORPS FRITTE A PARTIR DE FIBRES METALLIQUES

(84) Designated Contracting States:
**AT BE BG CH CY CZ DE DK EE ES FI FR GB GR HU IE IS IT LI LT LU MC NL PL PT RO SE SI SK TR**

(30) Priority: **15.04.2004 EP 04101531**

(43) Date of publication of application:
**21.02.2007 Bulletin 2007/08**

(73) Proprietor: **NV Bekaert SA**
**8550 Zwevegem (BE)**

(72) Inventors:
• **STOURNARAS, Constantine**
**GR-34100 Chalkida (GR)**
• **ANDREOULI, Constantina**
**GR-34100 Vathi Avlidos (GR)**
• **TATOUDI, Zoi**
**GR-34100 Chalkida (GR)**
• **VERSCHAEVE, Frank**
**B-8553 Otegem (BE)**
• **VROMANT, Carl**
**B-9840 De Pinte (BE)**
• **VAN BETSBRUGGE, Gerrit**
**B-8510 Bellegem (BE)**

(74) Representative: **Messely, Marc et al**
**N.V. Bekaert S.A.**
**Industrial Property Department - 6030**
**Bekaertstraat 2**
**8550 Zwevegem (BE)**

(56) References cited:
EP-A- 0 933 984    WO-A-98/43756
US-A- 3 127 668    US-A- 3 158 532
US-A- 3 437 457    US-A- 4 729 871
US-A- 4 828 930    US-A1- 2003 154 700
US-B1- 6 309 546

• PATENT ABSTRACTS OF JAPAN vol. 0110, no. 67 (M-566), 28 February 1987 (1987-02-28) -& JP 61 223105 A (TOMOEGAWA PAPER CO LTD), 3 October 1986 (1986-10-03) cited in the application
• PATENT ABSTRACTS OF JAPAN vol. 1999, no. 10, 31 August 1999 (1999-08-31) -& JP 11 131105 A (TOMOEGAWA PAPER CO LTD), 18 May 1999 (1999-05-18) cited in the application
• RANDALL M. GERMAN: "Powder metallurgy science" 1994, MPIF , USA , XP002296969 pages 202-205; figure 6.14
• R. DE BRUYNE: "SINTERED METAL FIBER PRODUCTS" ADVANCES IN POWDER METALLURGY AND PARTICULATE MATERIALS, vol. 5, 1994, pages 419-430, XP009036144 USA

**Description**

**Field of the invention.**

The present invention relates to a method of manufacturing of a sintered metal fiber medium.

**Background of the invention.**

Sintered metal fiber media are well known in the art for numerous applications, such as e.g. liquid or gas filtration.

A first method for providing sintered metal fiber medium is to provide a metal fiber web by air lay down, and sintering this air laid web in appropriate furnaces.

A disadvantage of this air lay down web, is the fact that the web is usually relatively inhomogeneous, especially when relatively thin sintered metal fiber medium are to be provided. This because the air laid webs can hardly be provided sufficiently homogeneous, and therefore, to have a sintered metal fiber medium with homogenous properties over its surface, usually several air laid webs are stacked (so-called doubled).

An other method to provide a web, prior to sintering operation, is to use the so-called wet lay down method or paper making method, as described in WO98/43756, EP933984A, JP11-131105, JP61-225400 and JP61-223105. The metal fibers are brought in a slurry, which slurry is poured on a screen. The water is sucked from the slurry through the screen. The remaining dewatered slurry is then sintered. A binding agent may be used to temporarily bind the metal fibers to each other and so to make the dewatered slurry transportable. This dewatered slurry is then sintered, possibly first debinding the binding agent.

A disadvantage of the wet webbing is that in case that thin and relatively short fibers are used, some of the shorter fibers are sucked through the screen, together with the water being removed from the slurry. In case of thin webs made prior to sintering, the dewatering step may suck small or larger holes in the web where few or no fibers are retained for sintering. Also, an imprint of the supporting net, used to support the wet slurry during dewatering, is obtained. The net pattern is noticed on the dewatered web as repetitive thinner spots.
As a result, the dewatered slurry and thus the sintered metal fiber medium, may have inhomogeneous zones where less fibers are present, even when several layers of the freshly dewatered webs are stacked one to the other prior to sintering.

Especially in case fibers with small equivalent diameter, e.g. $2\mu m$ to $6\mu m$, are used, the phenomena of sucking fibers with the water during dewatering is noticed. This because usually the amount of fibers with smaller lengths is larger, the finer the fibers are. As a result, more fibers with a short length are sucked with the water during dewatering in case of fibers with small equivalent diameter.

**Summary of the invention.**

It is an object of the present invention to provide a method for manufacturing sintered metal fiber media which overcomes the drawbacks of prior art. It is an object of the present invention to provide a method of manufacturing a sintered metal fiber medium with homogeneous properties over its surface. It is also an object of the present invention to provide a method of manufacturing a sintered metal fiber medium with homogeneous properties over its surface comprising relatively short and/or fine metal fibers. It is further an object of the present invention to provide a method of manufacturing a sintered metal fiber medium with homogeneous properties over its surface, which medium has a relatively small thickness.

A method for manufacturing a sintered metal fiber medium as subject of the invention comprises the steps as described in claim 1.

The slurry used for casting using an applicator, or so-called tape casting, comprises an amount of metal fibers in the range of 2% weight to 40% weight of the slurry, more preferred between 5% weight and 15%weight of the slurry. Apparently, such concentration combined with the tape casting action to provide substantially flat layers of slurry, causes metal fibers to be distributed more homogeneously, so providing sintered metal fiber medium having more homogeneous properties over its surface and in depth of the medium.
Too much metal fibers in the slurry may cause conglomeration of the fibers, causing on its turn inhomogeneous metal fiber distribution throughout the sintered metal fiber medium.
Too little metal fibers in the slurry may cause problems during debinding, where too much debinding causes disturbing of the sintering of the metal fibers. Further, such production of sintered metal fiber medium becomes uneconomic, as too much energy is to consumed for debinding the binding agent, and a large volume of binding material is to be removed.
In each cast layer, the metal fiber distribution over the surface may become irregular.

In a further preferred method, the slurry comprises a solvent for dissolving the binding agent, and during solidification of the slurry, all solvent is removed by evaporation. This has a further advantageous effect on the metal fiber distribution homogeneity over the surface and in depth of the sintered metal fiber medium which results from the further process.

Considering now the method to provide a sintered metal fiber medium as subject of the invention in more detail.

In a first step, metal fibers are to be provided. Any type of metal or metal alloy may be used to provide the metal fibers.

The metal fibers are for example made of steel such as stainless steel.

Preferred stainless steel alloys are AISI 300 or AISI 400-serie alloys, such as AISI 316L or AISI 347, or alloys comprising Fe, Al and Cr, stainless steel comprising Chromium, Aluminum and/or Nickel and 0.05 to 0.3 % by weight of Yttrium, Cerium, Lanthanum, Hafnium or Titanium, such as e.g. DIN 1.4767 alloys or Fecralloy®, are used. Also Cupper or Copper-alloys, or Titanium or Titanium alloys may be used.

The metal fibers can also be made of Nickel or a Nickel alloy.

Metal fibers may be made by any presently known metal fiber production method, e.g. by bundle drawing operation, by coil shaving operation as described in JP3083144, by wire shaving operations (such as steel wool) or by a method providing metal fibers from a bath of molten metal alloy.

In order to provide the metal fibers with their average length, the metal fibers may be cut using the method as described in WO02/057035, or by using the method to provide metal fiber grains such as described in US4664971.

The metal fibers used to provide the sintered metal fiber medium are characterized in having an equivalent diameter D and an average fiber length L.

With equivalent diameter of a metal fiber is meant the diameter of an imaginary circle having the same surface as the surface of a radial cross section of the fiber.

Preferably the equivalent diameter D of the metal fibers is less than $100\mu m$ such as less than $65\mu m$, more preferably less than $36\mu m$ such as $35\mu m$, $22\mu m$ or $17\mu m$. Possibly the equivalent diameter of the metal fibers is less than $15\mu m$, such as $14\mu m$, $12\mu m$ or $11\mu m$, or even more preferred less than $9\mu m$ such as e.g. $8\mu m$. Most preferably the equivalent diameter D of the metal fibers is less than $7\mu m$ or less than $6\mu m$, e.g. less than $5\mu m$, such as $1\mu m$, $1.5\mu m$, $2\mu m$, $3\mu m$, $3.5\mu m$, or $4\mu m$.

The metal fibers all have an individual fiber length. As some distribution on these fiber lengths may occur, due to the method of manufacturing the metal fibers, the metal fibers, used to provide a sintered metal fiber medium as subject of the invention, have an average fiber length L. This length is determined by measuring a significant number of fibers, according to appropriate statistical standards. The average fiber length of the metal fibers is smaller than 10mm, e.g. smaller than 6mm, preferably smaller than 1mm, such as smaller than 0.8mm or even smaller than 0.6mm such as smaller than 0.2mm. As according to the present invention, substantially all fibers used during the method of manufacturing the sintered metal fiber medium will occur in the sintered metal fiber medium, the average fiber length L can be measured in a similar way on the sintered metal fiber medium.

The metal fibers in the sintered metal fiber medium thus may have a ratio of average fiber length over diameter (UD) being preferably less than 110, more preferred less than 100, but usually more than 30. An UD of about 30 to 70 is preferred for metal fibers with equivalent diameter in the range up to $6\mu m$, in case the metal fibers are obtained by the process as described in WO02/057035, hereby incorporated by reference.

In the second step of the method as subject of the invention, a slurry is to be provided. Although not to be understood as limiting, preferably the slurry, comprising metal fiber, a solvent and a binding agent, has a metal fiber concentration in the range of 2% weight to 40% weight of the slurry. Preferably 5% weight to 15% weight of the slurry is provided by metal fibers. It was found that the smaller the equivalent diameter of the metal fibers, the lower the concentration of metal fibers is kept.

Alternatively, the slurry comprises a polymer binding agent and metal fibers, which polymer binding agent is heated to reduce its viscosity.

A binding agent for the purpose of the invention is to be understood as a product for thickening the slurry. Preferably a water soluble binding agent is used, e.g. polyvinyl alcohols, methyl cellulose ethers, hydroxypropylmethylcellulose, polyethers from ethyleneoxide, acrylic acid polymers or acrylic copolymers. The binding agent is added to the solvent, in a concentration of preferably between 0.5% weight and 30 %weight of the slurry. Most preferred, a binding agent is chosen which requires a concentration of less than 20% weight or even less than 15 % weight or even less than 10% weight of the slurry, in order to provide the required viscosity . A viscosity range between 1000 cPs and 20000 cPs is preferably used for the slurry. The components of the slurry are blended using appropriate mixing equipment. In case foaming of the slurry occurs, small amounts of a defoaming component is added.

In a third step, the slurry is tape cast using an applicator, such as a doctor blade, on a preferably substantially flat surface. The clearance of the applicator is kept relatively small, this is preferably between 0.2mm and 6mm, more preferred between 0.2mm and 3mm. The speed of movement of the applicator is chosen according to the viscosity of the slurry and the composition of the slurry.

The clearance and thus the thickness of the layer of the slurry is chosen in function of the amount of metal fibers in the slurry, the required weight per surface unit of the sintered metal fiber medium, and the required density of the sintered metal fiber medium.

In a next step, the cast slurry is solidified, forming a foil which comprises the binding agent and the metal fibers. This is preferably done by evaporating the solvent. A solvent may be used which evaporates easily at ambient temperature. Alternatively, the evaporation may be executed as a drying step in case water was used as solvent. The drying or evaporating may be executed or assisted by air-drying or may be forced by heating the cast slurry, e.g. by forcing heated air over the surface of the cast slurry, or by radiating, e.g. microwave- or IR-radiating.
It is understood that only the solvent, e.g. water is removed, which solvent was not chemically bound to the binding agent. It is understood that, in case solvent is evaporated, the thickness of the cast slurry is reduced up to some extent, as the volume of the cast slurry is reduced to provide the volume of the foil.
Alternatively, the binding agent is solidified by cooling the cast slurry, in case the binding agent was heated to reduce its viscosity.

In the preferred situation, where all solvent is removed by evaporation or where the binding agent is solidified by cooling, no fibers are lost due to the mechanically removal of the solvent. This has a further advantageous effect on the metal fiber distribution homogeneity over the surface and in depth of the sintered metal fiber medium which results from the further process. As no fibers are removed, in this way the L/D ratio of the fibers in the sintered metal fiber medium is identical to the UD of the metal fibers used to make the slurry.

Possibly the foil, which can be handled as the binding agent interconnects the metal fibers sufficiently, may be subjected to a pressing action to further reduce the thickness of the foil.

In a final step, the foil comprising the metal fibers and the binding agent is subjected to thermal treatment, for debinding of the binding agent, and consecutively to sinter the metal fibers to each other.
Such debinding and sintering may be done in one thermal operation, or may be executed as two consecutive operations, not necessarily being done immediately one after the other.

After sintering, the sintered metal fiber medium may further be subjected to a compression , e.g. rolling or calendaring, in order to further reduce the thickness of the sintered metal fiber medium, or to smoothen the surface of the sintered metal fiber medium.

Possibly, several layers of foil may be stacked to form a layered medium. The different foils are not to comprise identical metal fibers, nor should they be of an identical metal fiber content per surface unit or volume. The different foils may differ from each other in metal fibers, metal fiber content, thickness, weight and other properties.
Possibly, other porous metal structures may be stacked to one or more foils. As an example, a metal wire mesh, an expanded metal sheet or one or more layers of air laid web, wet laid web or a layer of metal powder may be added to the foils comprising metal fibers and a binding agent.
Possibly, a metal foil or a metal plate is added to the stack.

Alternatively, such porous metal structure or metal foil or plate may be added to the sintered metal fiber medium as subject of the invention, e.g. by sintering such porous metal structure or metal foil or plate to the sintered metal fiber medium as subject of the invention in a second sintering operation.

Surprisingly it was found that a metal fiber medium obtained by using a method as subject of the invention, has an improved homogeneity of its physical properties such as air permeability, filtration efficiency, pore size, bubble point pressure and pore distribution.

The thickness of the sintered metal fiber medium may vary over a large range, but relatively thin sintered metal fiber medium may be obtained, e.g. sintered metal fiber medium with thickness less than or equal to 0.2mm or even less than or equal to 0.1 mm. Even more surprising, it was found that sintered metal fiber media having such thickness less than 02 mm or less than 0.1 mm, a bubble point pressure of more than 10000Pa may be obtained. It was also notices that a high filtration efficiency may be obtained when such sintered metal fiber media having a thickness less than 0.2 mm or less than 0.1mm are used as a liquid filter.

The bubble point pressure is measured using according to the ISO 4003 testing method.

The weight of the sintered metal fiber medium as subject of the invention is preferably less than 500g/m$^2$, more preferred less than 400 g/m$^2$ or even less than 300g/m$^2$, such as less than 100g/m$^2$ such as about 30g/m$^2$.

The porosity of the sintered metal fiber medium may vary over a large range, but it was found that such sintered metal fiber medium may have a porosity in the range of 40% to 99%, more preferred in the range of 55% to 80%, such as in the range of 55% to 70%. Without applying a rolling or pressing operation to the foil or sintered metal fiber medium, porosities of 80 to 99% may be obtained. Lower porosities may be obtained by applying a rolling or pressing operation to either the foil and/or the sintered metal fiber medium.

The term "porosity" P is to be understood as

$$P = 100^*(1 - d)$$

wherein

$$d = (\text{weight of 1 m}^3 \text{ sintered metal fiber medium}) / (SF)$$

wherein

S F = specific weight per m³ of alloy out of which the metal fibers of the sintered metal fiber medium are provided.

As the sintered metal fiber medium may be used for surface filtration in solid-liquid filtration.

A sintered metal fiber medium as subject of the invention may have a mean flow pore size of less than 2 times the equivalent diameter D.

Preferably it was found that the sintered metal fiber medium has a mean flow pore size of less than 1.5 times said equivalent diameter D. More preferred, the mean flow pore size of the sintered metal fiber media is equal or less than the equivalent diameter D of the metal fibers of the sintered metal fiber medium, increased by one $\mu$m.

The mean flow pore size is measured using a "Coulter Porometer I I" testing equipment, which performs measurements of the mean flow pore size according to ASTM F-316-80.

In the preferred case, when the mean flow pore size of less than 2 times the equivalent diameter D and when the metal fibers in the sintered metal fiber medium have a ratio of average fiber length over diameter (UD) which is preferably less than 110, more preferred less than 100, but usually more than 30, surprisingly it was found that such sintered metal fiber media can be cleaned repetitively, e.g. by back flush, back flush or back pulse, with high efficiency and apparently with a restricted or even no particles retained after cleaning. Especially when the method is used in which all the solvent is removed by evaporation.

An UD of about 30 to 70 is preferred for metal fibers with equivalent diameter in the range up to 6$\mu$m, in case the metal fibers are obtained by the process as described in WO02/057035, hereby incorporated by reference.

Advantageously the outer surface of the sintered metal fiber medium, to be used as inflow side of the medium when used for solid-liquid surface filtration, has a substantially flat surface. With substantially flat is meant that the Ra value measured over a statistically relevant length less than three times the equivalent diameter D of the metal fibers of the sintered metal fiber medium. More preferred, Ra value of the first outer surface of the sintered metal fiber medium is less then the equivalent diameter D, for example less than 0.5 times the equivalent diameter D.

Ra value is defined as the arithmetic mean deviation of the surface height from the mean line through the measured profile from the measured length. The mean line is defined so that equal areas of the profile lie above and below the line.

A sintered metal fiber medium obtained by the method as subject of the invention may advantageously be used as filter medium, for filtration of particulates from fluids, either gas or liquid, e.g. by surface filtration. As an example, the sintered metal fiber medium may be used for soot filtration, or for filtration of beverages, such as beer, wine, or for filtration of oils or coolants. The sintered metal fiber medium may also be used in fuel cells.

## Brief description of the drawings.

The invention will now be described into more detail with reference to the accompanying drawings wherein

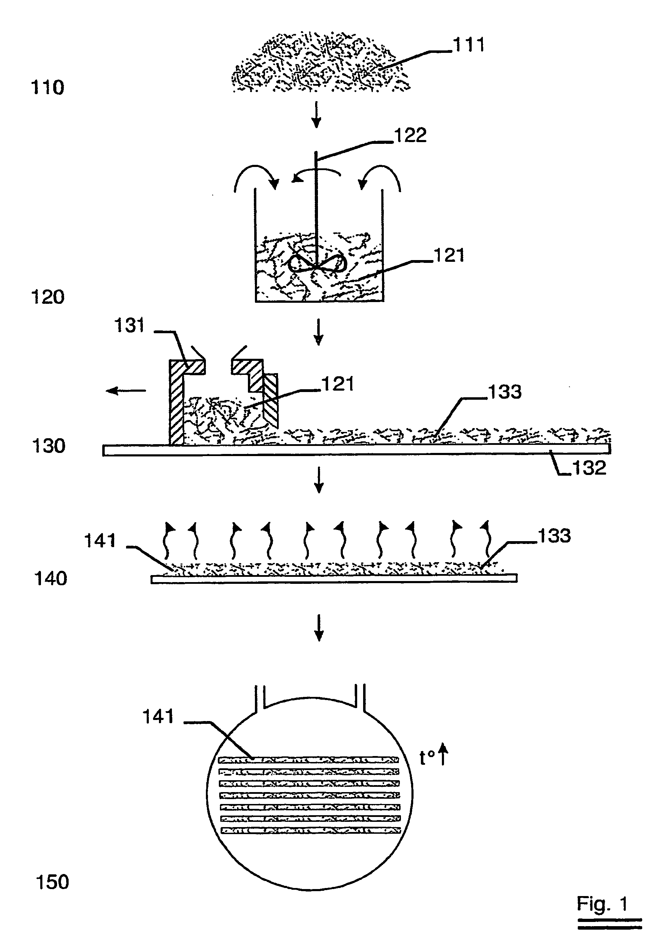

- FIGURES 1, 2, 3, 4 and 5 show schematically the steps of methods as subject of the invention.

## Description of the preferred embodiments of the invention.

An embodiment of the present invention is described hereinafter.

In a method as shown in FIGURE 1, in the first step 110 of the method as subject of the invention, metal fibers 111 are provided.

In a next step 120, a slurry 121 was made from metal fibers, a binding agent and a solvent preferably water.

This slurry was blend, using a blending means 122, for several minutes in order to form a substantially stable slurry.

In step 130, the slurry 121 was provided to an applicator 131, being doctor blade and tape cast on a substantially flat and water repellant surface 132. A cast slurry 133 was provided.

In the next step 140, the cast slurry 133 was dried and transformed into a foil 141, as an example in ambient temperature.

In a next step 150, a thermal treatment was executed in two steps. During the first part, in order to debind the binding agent, the foil 141 was subjected to a thermal treatment under ambient atmosphere. Consecutively, the debound material was sintered using a sintering process.

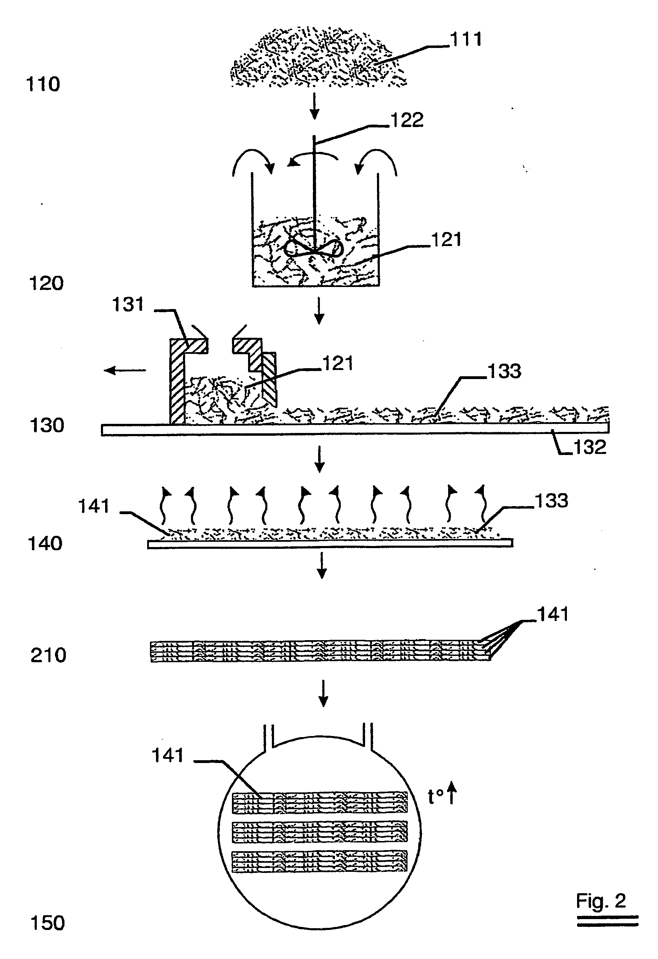

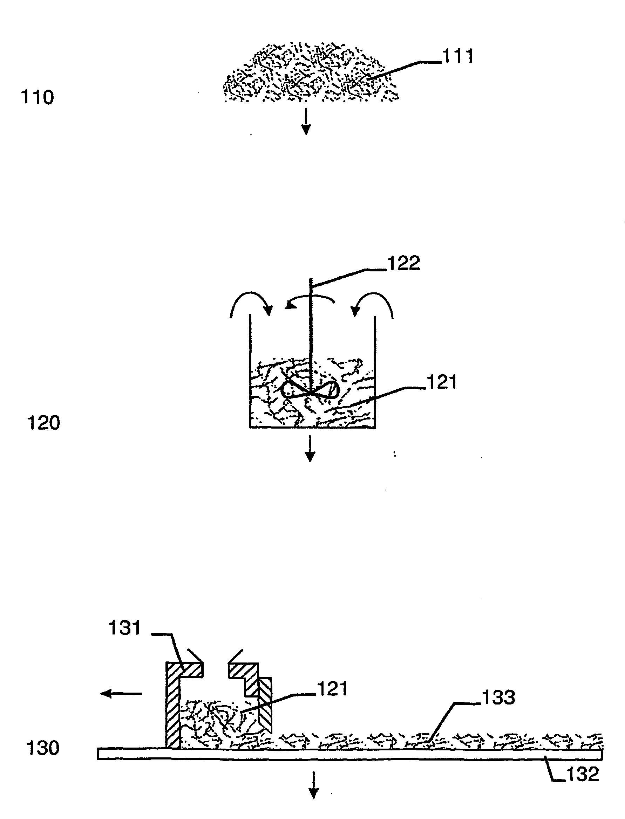

As shown in FIGURE 2, in an additional step 210, several foils 141 may be stacked to each other prior to debinding the binding agent.

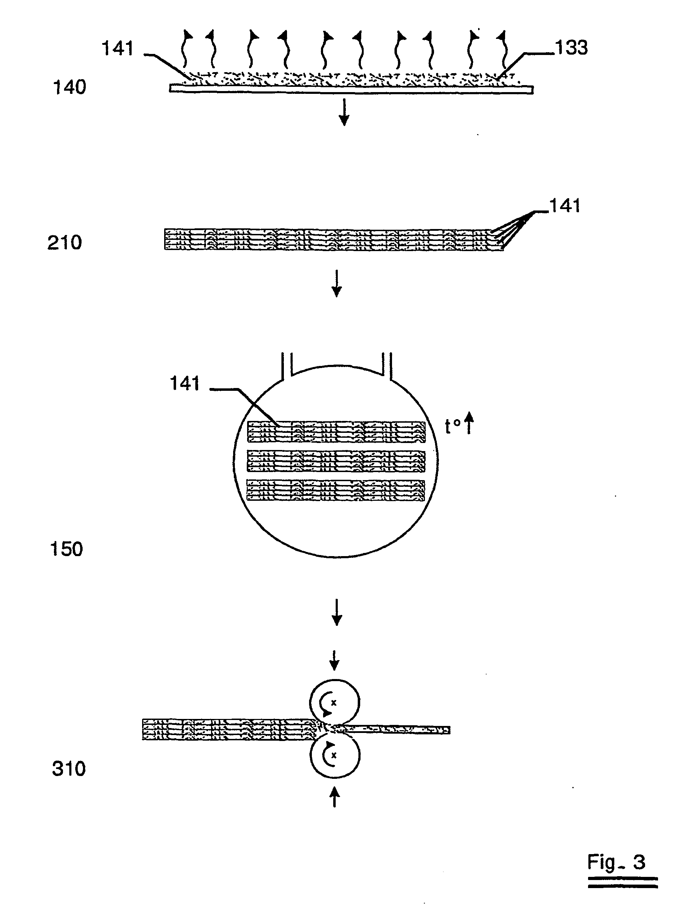

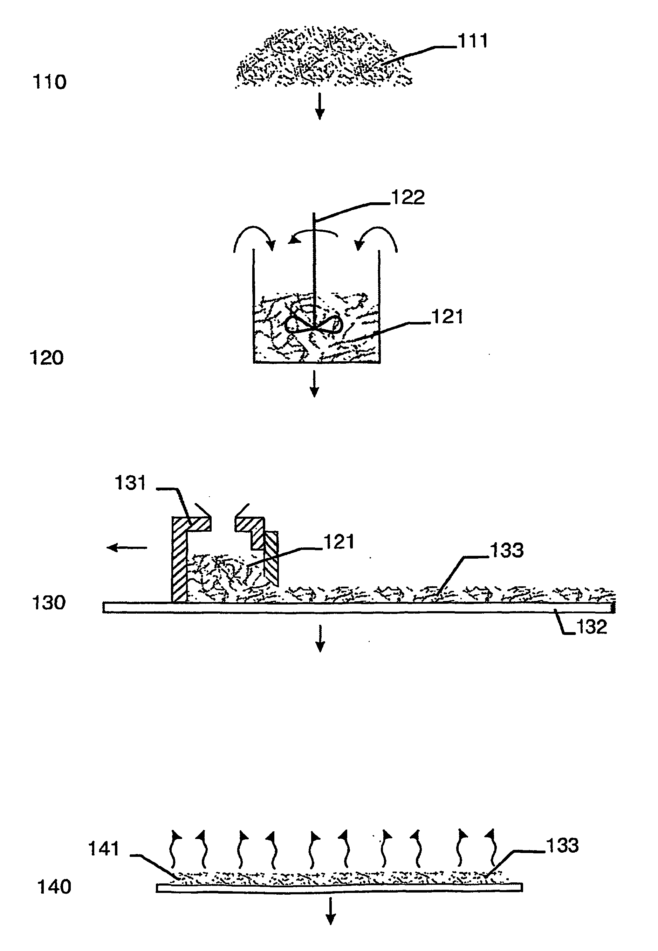

As shown in FIGURE 3, an additional step of compressing, e.g. rolling the sintered metal fiber medium 311 in step 310 may be executed. All other steps are identical to the steps as described and shown in FIGURE 1 and FIGURE 2.

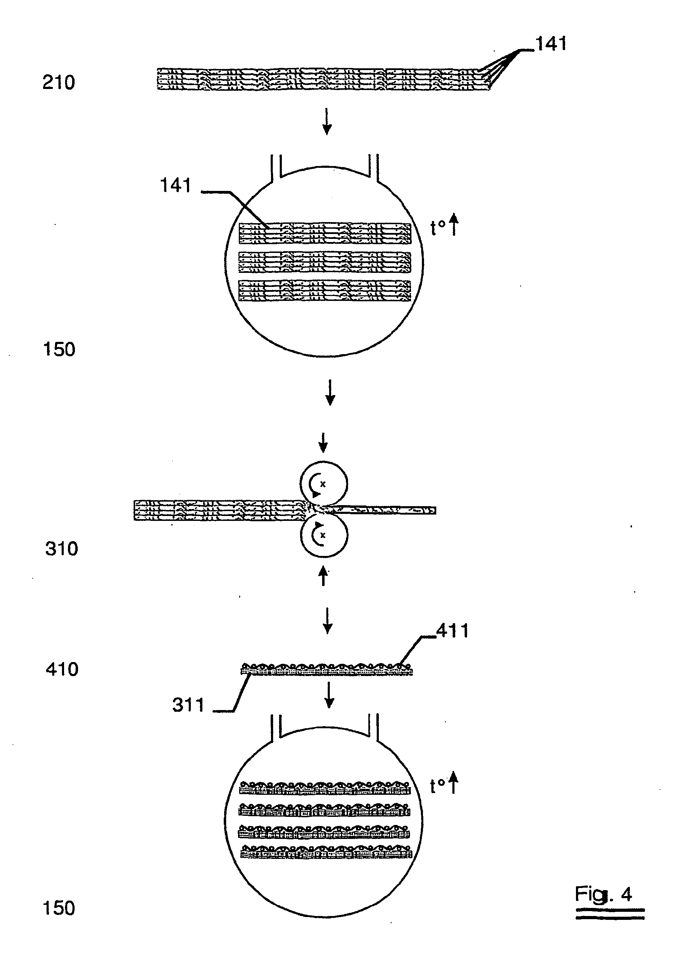

As shown in FIGURE 4, in a next step after sintering of the metal fibers in the thermal treatment step 150, and possibly after compression step 310, a porous metal structure 411, e.g. a mesh, a metal foil or a metal plate may be added to the sintered metal fiber medium 311 and sintered in a second sintering operation to the sintered metal fiber medium.

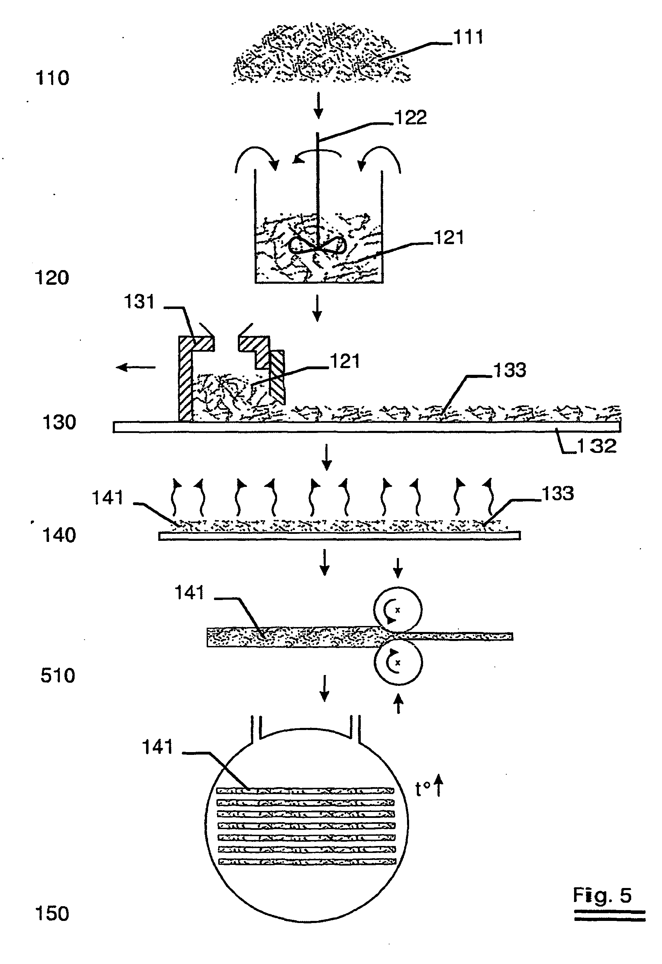

As shown in FIGURE 5, an additional step of compressing, e.g. rolling the foil prior to debinding in step 510 may be executed. All other steps are identical to the steps as described and shown in FIGURE 1.

It is understood that this compression step 510 may as well be combined with all other steps as shown in FIGURES 1, 2, 3 and 4.

Possibly, the sintered metal fiber medium was layered with a metal wire mesh and sintered a second time to attach the mesh to the sintered metal fiber medium.

As an example, a sintered metal fiber medium was provided using the method as shown in FIGURE 4.

In a first step, metal fibers with equivalent diameter of $2\mu m$, made by means of bundle drawing processes, are provided. The endless metal fibers are cut into metal fibers having an ave rage length of $109\mu m$, using the method of WO02/057035. The metal fibers were provided out of AISI 316L alloy.

Hereafter, a slurry was made using following composition:

9.09% weight of the slurry being metal fibers,
1.36% weight of the slurry being methyl cellulose ether (being binding agent)
89.55% weight of the slurry being water (being the solvent).

The slurry was tape cast using a doctor blade having a clearance of 1.5mm.

Such cast slurry was solidified by drying to the air for about 24h. Alternatively, IR-radiation may be used to heat the cast slurry and assist the drying operation. A foil was obtained comprising the binding agent with chemically bound water and metal fibers. A non-sintered metal fiber medium was obtained having a thickness of $251\mu m$ and having a weight of 127 g/m$^2$. The non-sintered metal fiber medium comprised 13% weight of binding agent, and 87% weight of metal fibers.

Several foils were stacked to provide a layered foil of about 400g/m$^2$.

This stack of foils is subjected for about 30 minutes to a temperature of 400°C under ambient atmosphere for debinding the binding agent. Consecutively, the debound material was sintered at 1100°C for about 30 minutes under H2. The metal fibers of all layers of foil are sintered to each other.

The sintered metal fiber medium obtained was rolled to a porosity of 65%, having a weight of about 369g/m$^2$. The sintered metal fiber medium has a bubble point pressure of 9470Pa and a mean flow pore size of $2.9\mu m$. An Ra of $0.99\mu m$ was obtained.

A metal wire mesh is added to the sintered metal fiber product, and again subjected to a sintering operation under high vacuum atmosphere at about 1050°C for 60 minutes. Alternatively a metal foil or plate is sintered to the sintered metal fiber medium. The mesh may as well be added to the stack of foils made prior to the first sintering operation.

Using similar steps, a sintered metal fiber product may be obtained, when using metal fibers of $1.5\mu m$ diameter, having a substantially similar UD. The obtained sintered metal fiber medium have a weight of about 333g/m$^2$ and a porosity of 65%. The sintered metal fiber medium has a bubble point pressure of 13609Pa and a mean flow pore size of $2.4\mu m$.

**Claims**

1. A method for manufacturing a sintered metal fiber medium, comprising the steps of:

• providing metal fibers, said fibers having an UD of less than 110, said L being the average fiber length, said D being the equivalent diameter of the metal fibers;
• making a slurry comprising said metal fibers and a binding agent by mixing said metal fibers and said binding agent, wherein the concentration of metal fibers in said slurry is in the range of 2%weight to 40%weigth of said slurry and wherein the concentration of the binding agent in said slurry is in the range of 0,5%weight to 30%weight of said slurry;
• tape casting a layer of said slurry on a support using an applicator;
• solidifying said slurry, providing a foil comprising all of said metal fibers and all of said binding agent;
• debinding said binding agent in said foil and sintering said metal fibers.

**2.** A method as in claim 1, wherein said slurry comprising a solvent dissolving said binding agent.

**3.** A method as in claim 2, wherein said solidifying of said slurry is done by evaporation of all of said solvent from said slurry.

**4.** A method as in any one of claims 2 to 3, wherein said solvent is water.

**5.** A method as in claim 1, wherein said slurry is provided by heating said binding agent.

**6.** A method as in one of the claims 1 to 5, wherein said method comprises an additional step of reducing the thickness of said foil by a pressing operation.

**7.** A method as in one of the claims 1 to 6, wherein said method comprises an additional step of reducing the thickness of said sintered metal fiber medium.

**8.** A method as in one of the claims 1 to 7, wherein said method comprises an additional step of stacking several foils to each other prior to said debinding of said binding agent.

**9.** A method as in one of the claims 1 to 8, wherein said method comprises an additional step of adding a porous metal structure, a metal foil or metal plate to said foil prior to debinding said binding agent.

**10.** A method as in one of the claims 1 to 9, wherein said method comprises an additional step of sintering a porous metal structure, a metal foil or metal plate to said sintered metal fiber medium.

**11.** A method as in one of the claims 1 to 10, wherein the thickness of said sintered metal fiber medium is less than or equal to 0.2mm

**12.** A method as in one of the claims 1 to 11, wherein the porosity of said sintered metal fiber medium is in the range of 40% to 99%.

**13.** A method as in one of the claims 1 to 12, wherein the bubble point pressure of said sintered metal fiber medium is more than 10000Pa.

**14.** A method as in one of the claims 1 to 13, wherein the mean flow pore size of said sintered metal fiber medium is less than 1.5 times said equivalent fiber diameter D of said metal fibers.

**Patentansprüche**

**1.** Verfahren zur Herstellung eines gesinterten Körpers aus Metallfasern, welches die folgenden Schritte aufweist:

• Bereitstellen von Metallfasern, wobei die Fasern ein L/D-Verhältnis von weniger als 110 aufweisen, wobei L für die mittlere Faserlänge und D für den Äquivalenzdurchmesser der Metallfasern steht;
• Herstellen einer Schlämme, welche die Metallfasern und ein Bindemittel aufweist, durch Vermischen der Metallfasern mit dem Bindemittel, wobei die Konzentration der Metallfasern in der Schlämme im Bereich von 2 Gewichts-% bis 40 Gewichts-% der Schlämme liegt, und wobei die Konzentration des Bindemittels in der Schlämme im Bereich von 0,5 Gewichts-% bis 30 Gewichts-% der Schlämme liegt;
• Gießen einer Schicht der Schlämme auf ein Substrat in einem Foliengießverfahren unter Verwendung einer Auftragsvorrichtung;
• Verfestigen der Schlämme, Bereitstellen einer Folie, welche die gesamten Metallfasern und das gesamte Bindemittel aufweist;
• Entbinden des Bindemittels in der Folie und Sintern der Metallfasern.

**2.** Verfahren nach Anspruch 1, wobei die Schlämme ein Lösungsmittel aufweist, welches das Bindemittel löst.

**3.** Verfahren nach Anspruch 2, wobei das Verfestigen der Schlämme durch Verdampfen des gesamten Lösungsmittels aus der Schlämme geschieht.

**4.** Verfahren nach einem der Ansprüche 2 bis 3, wobei es sich bei dem Lösungsmittel um Wasser handelt.

**5.** Verfahren nach Anspruch 1, wobei die Schlämme durch Erwärmen des Bindemittels bereitgestellt wird.

**6.** Verfahren nach einem der Ansprüche 1 bis 5, wobei das Verfahren einen zusätzlichen Schritt des Verringerns der Dicke der Folie durch einen Pressvorgang aufweist.

**7.** Verfahren nach einem der Ansprüche 1 bis 6, wobei das Verfahren einen zusätzlichen Schritt des Verringerns der Dicke des gesinterten Körpers aus Metallfasern aufweist.

**8.** Verfahren nach einem der Ansprüche 1 bis 7, wobei das Verfahren vor dem Entbinden des Bindemittels einen zusätzlichen Schritt des Aufeinanderstapelns mehrerer Folien aufweist.

**9.** Verfahren nach einem der Ansprüche 1 bis 8, wobei das Verfahren vor dem Entbinden des Bindemittels einen zusätzlichen Schritt des Hinzufügens einer porösen Metallstruktur, einer Metallfolie oder einer Metallplatte zu der Folie aufweist.

**10.** Verfahren nach einem der Ansprüche 1 bis 9, wobei das Verfahren einen zusätzlichen Schritt des Sinterns einer porösen Metallstruktur, einer Metallfolie oder einer Metallplatte zu dem gesinterten Körper aus Metallfasern aufweist.

**11.** Verfahren nach einem der Ansprüche 1 bis 10, wobei die Dicke des gesinterten Körpers aus Metallfasern nicht mehr als 0,2 mm beträgt.

**12.** Verfahren nach einem der Ansprüche 1 bis 11, wobei die Porosität des gesinterten Körpers aus Metallfasern im Bereich von 40% bis 99% liegt.

**13.** Verfahren nach einem der Ansprüche 1 bis 12, wobei der Blasenbildungsdruck des gesinterten Körpers aus Metallfasern mehr als 10.000 Pa beträgt.

**14.** Verfahren nach einem der Ansprüche 1 bis 13, wobei die mittlere Porengröße (Mean Flow) des gesinterten Körpers aus Metallfasern weniger als das 1,5-fache des Äquivalenzfaserdurchmessers D der Metallfasern beträgt.


**Revendications**

**1.** Procédé pour fabriquer un milieu de fibres métalliques frittées, comprenant les étapes consistant à :

• obtenir des fibres métalliques, lesdites fibres présentant un rapport L/D inférieur à 110, ledit L étant la longueur moyenne des fibres, ledit D étant le diamètre équivalent des fibres métalliques ;
• préparer une bouillie comprenant lesdites fibres métalliques et un liant en mélangeant lesdites fibres métalliques et ledit liant,
la concentration de fibres métalliques dans ladite bouillie se situant dans la gamme de 2 % en poids à 40 % en poids de ladite bouillie, et la concentration de liant dans ladite bouillie se situant dans la gamme de 0,5 % en poids à 30 % en poids de ladite bouillie ;
• couler en bande une couche de ladite bouillie sur un support en utilisant un applicateur ;
• solidifier ladite bouillie, pour obtenir une feuille comprenant toutes lesdites fibres métalliques et tout ledit liant ;
• délianter ledit liant dans ladite feuille et fritter lesdites fibres métalliques.

**2.** Procédé selon la revendication 1, dans lequel ladite bouillie comprend un solvant dissolvant ledit liant.

**3.** Procédé selon la revendication 2, dans lequel ladite solidification de ladite bouillie est effectuée par évaporation de tout ledit solvant de ladite bouillie.

**4.** Procédé selon l'une quelconque des revendications 2 et 3, dans lequel ledit solvant est l'eau.

**5.** Procédé selon la revendication 1, dans lequel ladite bouillie est obtenue en chauffant ledit liant.

**6.** Procédé selon l'une quelconque des revendications 1 à 5, ledit procédé comprenant une étape supplémentaire consistant à réduire l'épaisseur de ladite feuille par une opération de pression.

7.  Procédé selon l'une quelconque des revendications 1 à 6, ledit procédé comprenant une étape supplémentaire consistant à réduire l'épaisseur dudit milieu de fibres métalliques frittées.

8.  Procédé selon l'une quelconque des revendications 1 à 7, ledit procédé comprenant une étape supplémentaire consistant à empiler plusieurs feuilles les unes sur les autres avant ledit déliantage dudit liant.

9.  Procédé selon l'une quelconque des revendications 1 à 8, ledit procédé comprenant une étape supplémentaire consistant à ajouter une structure métallique poreuse, une feuille métallique ou une plaque métallique à ladite feuille avant de délianter ledit liant.

10. Procédé selon l'une quelconque des revendications 1 à 9, ledit procédé comprenant une étape supplémentaire consistant à fritter une structure métallique poreuse, une feuille métallique ou une plaque métallique dans ledit milieu de fibres métalliques frittées.

11. Procédé selon l'une quelconque des revendications 1 à 10, dans lequel l'épaisseur dudit milieu de fibres métalliques frittées est inférieure ou égale à 0,2 mm.

12. Procédé selon l'une quelconque des revendications 1 à 11, dans lequel la porosité dudit milieu de fibres métalliques frittées se situe dans la gamme de 40 % à 99 %.

13. Procédé selon l'une quelconque des revendications 1 à 12, dans lequel la pression au point de bulle dudit milieu de fibres métalliques frittées est supérieure à 10 000 Pa.

14. Procédé selon l'une quelconque des revendications 1 à 13, dans lequel la taille moyenne des pores d'écoulement dudit milieu de fibres métalliques frittées est inférieure à 1,5 fois le diamètre équivalent D desdites fibres métalliques.

EP 1 753 565 B1

Fig. 1

110

111

122

121

120

131

121

130

133

132

141

133

140

141

210

141

t° ↑

150

Fig. 2

110

111

120

122

121

130

131

121

133

132

140

141        133

210        141

150     141     t°

310

Fig. 3

110

111

120

122

121

131

121

133

130

132

140

141

133

210

141

141

150

t° ↑

310

x

x

410

411

311

150

t° ↑

Fig. 4

110

111

122

120

121

131

121

133

130

132

141

133

140

141

510

141

t°

150

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9843756 A
- EP 933984 A
- JP 11131105 A
- JP 61225400 A
- JP 61223105 A
- JP 3083144 B
- WO 02057035 A
- US 4664971 A